# EUROPEAN PATENT APPLICATION

(11) **EP 4 834 174 A1**
(43) Date of publication of application: **04.11.2026**
(21) Application number: 25173868.8
(22) Date of filing: 01.05.2025
(51) Int. Cl.: A47B 47/04, F16B 12/20, A47B 77/08

(54) **BASE CABINET IN WHICH A WASHING MACHINE CAN BE PLACED**

(71) Applicant: Washtower IP B.V., 7552 CN Hengelo (NL)
(72) Inventor: Verburg, Theodorus Jacobus, 7552 CN Hengelo (NL)
(74) Representative: 't Jong, Bastiaan Jacob

(57) **Abstract**

The invention relates to a base cabinet in which a washing machine can be placed, the base cabinet comprising:
- two substantially vertical side walls(2, 3),
- a substantially horizontal bottom wall (4),
- a substantially horizontal top wall (5), and
- a substantially horizontal carrier (6) for carrying the washing machine, the carrier being placed between the bottom wall and the top wall,

wherein the side walls are placed on top of the bottom wall and wherein the carrier is fixed at a distance above the bottom wall, thus forming a first storage space between the bottom wall and the carrier and forming a second storage space between the carrier and the top wall for housing a washing machine,
wherein both side walls are each composed out of two, separate side wall portions (2a, 2b, 3a, 3b), wherein the carrier is positioned with a respective edge between the two side wall portions of each side wall; and
wherein the base cabinet further comprises pulling means (12, 13, 14) for pulling the two, separate side wall portions of each side wall towards each other and clamping therewith the carrier between the separate side wall portions.

## Description

The invention relates to a base cabinet in which a washing machine can be placed, the base cabinet comprising:
- two substantially vertical side walls,
- a substantially horizontal bottom wall,
- a substantially horizontal top wall, and
- a substantially horizontal carrier for carrying the washing machine, the carrier being placed between the bottom wall and the top wall,
wherein the side walls are placed on top of the bottom wall and wherein the carrier is fixed at a distance above the bottom wall, thus forming a first storage space between the bottom wall and the carrier and forming a second storage space between the carrier and the top wall for housing a washing machine. Such a base cabinet is for example known from EP 3522755.

In this publication a base cabinet, in which a washing machine can be placed, is shown. The side walls are made out of a single panel having a height of at least 1.80 meters. Typically, the base cabinet is packaged as a construction kit, such that the base cabinet can be transported efficiently. However, the height of the side walls is of influence on how the packaged cabinet can be transported. Due to the large length of the side walls, the cabinet cannot be placed on a pallet, but needs to be transported as general cargo.

In order for the base cabinet according to prior art to withstand the vibrations of the washing machine being placed on the carrier, and to pass safety testing protocols, the base cabinet has additional, plate-like support members supporting the carrier onto the bottom wall. These additional, plate-like support members increase the manufacturing costs of the base cabinet.

It is an object of the invention to reduce or even remove the above mentioned disadvantages.

This object is achieved according to the invention with a base cabinet according to the preamble, which is characterized in that both side walls are each composed out of two, separate side wall portions, wherein the carrier is positioned with a respective edge between the two side wall portions of each side wall; and
wherein the base cabinet further comprises pulling means for pulling the two, separate side wall portions of each side wall towards each other and clamping therewith the carrier between the separate side wall portions.

With the base cabinet according to the invention, the side walls are composed out of separate side wall portions. This allows for more compact packaging of the base cabinet and transporting the packaged base cabinet on pallets.

Furthermore, with the base cabinet according to the invention, the carrier is positioned between the two side wall portions of each side wall and thus rests on top of two side wall portions on either side. With a washing machine positioned on the carrier, the forces and vibrations can be transferred directly in vertical direction from the carrier into the side wall portions and to the bottom wall. This configuration therefore does not require additional plate-like support means to withstand the vibrations of the washing machine being placed on the carrier, and to pass safety testing protocols.

The pulling means, which pull the two, separate side wall portions towards each other, while clamping the carrier in between ensure that no play is present between the side wall portions and the carrier. Any play weakens the construction of the base cabinet and vibrations of the washing machine in combination with any play could cause severe damage to the base cabinet.

An embodiment of the base cabinet according to the invention further comprises two plate-like support members, each arranged parallel and against one of the side walls within the first storage space, and wherein the plate-like support members extend between and are in contact with the bottom wall and the carrier.

The plate-like support members provide additional support for the carrier allowing to position on the carrier a washing machine with even higher mass. In particular high-end washing machines have a high mass, relative to the more low-end washing machines, which dampens vibrations. With the additional support plate-like support members also washing machines of high mass can be housed safely and according to protocols.

Yet another embodiment of the base cabinet according to the invention further comprises a plate-like back support member arranged parallel to the back of the base cabinet, extending between and in contact with both the side walls and the bottom wall and the carrier.

This plate-like back support further strengthens the carrier allowing to safely support high mass washing machines.

In a preferred embodiment of the base cabinet according to invention the pulling means comprise an eccentric connector assembly having:
- a first rotatable eccentric cam arranged in a pocket provided in one of the side wall portions of a side wall;
- a system bolt having a first end mounted in the other of the side wall portions of the side wall and a second end shaped to engage with the first eccentric cam, wherein the system bolt extends parallel to the side wall through a hole arranged in the carrier;
wherein the first eccentric cam is rotatable within the pocket between a release position and a locking position, such that in the locking position, the cam applies a pulling force onto the system bolt, drawing the two side wall portions together and clamping the carrier in between.

An eccentric connector assembly is well known in the field of furniture. Such an eccentric connector is typically used to connect two plate-like elements and to draw the two elements tightly together.

With the base cabinet according to the invention, the system bolt extends from a first side wall portion through the carrier toward a second side wall portion. When the eccentric cam is rotated, the two side wall portions will be pulled together by the eccentric connector assembly and clamp the carrier between the two side wall portions. This will cancel out all play between the two side wall portions and the carrier.

In a further preferred embodiment of the base cabinet according to the invention the eccentric connector assembly further comprises a second rotatable eccentric cam arranged in a pocket provided in the other of the side wall portions of the side wall;
wherein the first end of the system bolt is shaped to engage with the second eccentric cam and
wherein the second eccentric cam is rotatable within the pocket to apply a pulling force onto the system bolt.

Although the first end of the system bolt could be provided with a thread to fasten the system bolt into the other of the side wall portions of the side wall, this mounting is less strong than providing a second eccentric cam in a pocket in the other of the side wall portions. The eccentric cams have a substantial larger contact surface with the side wall portions, such that a considerable higher pulling force can be obtained with the eccentric connector assembly.

The invention also relates to a combination of a base cabinet according to the invention and a washing machine, wherein the washing machine is arranged on top of the carrier and into the second storage space.

These and other features of the invention will be elucidated in conjunction with the accompanying drawings.
Figure 1 shows a perspective view of an embodiment of the base cabinet according to the invention.
Figure 2 shows the embodiment of figure 1 with the drawers removed.
Figure 3 shows a cross-sectional view of a detail of another embodiment of the base cabinet according to the invention.
Figure 4 shows a cross-sectional view of a detail of the embodiment of figures 1 and 2.

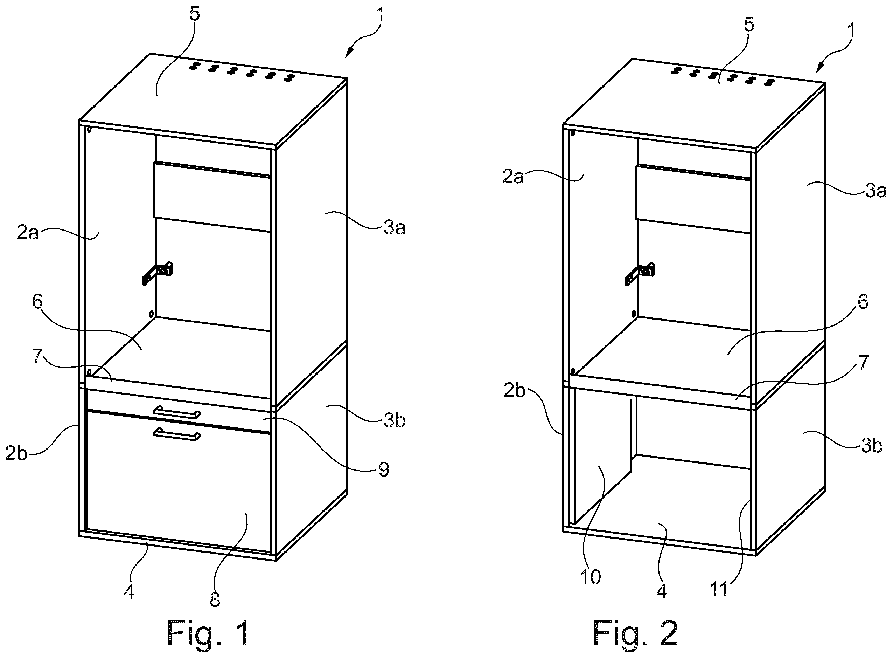

Figure 1 shows an embodiment of a base cabinet 1 according to the invention. The base cabinet 1 has two substantially vertical side walls 2, 3, a bottom wall 4, a top wall 5, and a carrier 6 for carrying the washing machine. A retaining member 7, such as known from EP 3522755, is provided at the front of the carrier 6 to prevent a washing machine from falling out.

Two drawers 8, 9 are arranged in the first storage space enclosed by the bottom wall 4, the side walls 2, 3 and the carrier 6.

According to the invention, the side walls 2, 3 are each composed out of two separate side wall portions 2a, 2b and 3a, 3b respectively. As can be seen, the edges of the carrier 6 are clamped between these side wall portions 2a, 2b and 3a, 3b.

In figure 2, the base cabinet 1 is shown with the drawers 8, 9 removed. This reveals two additional plate-like support members 10, 11, each arranged parallel and against one of the side wall portions 2b, 3b respectively and within the first storage space.

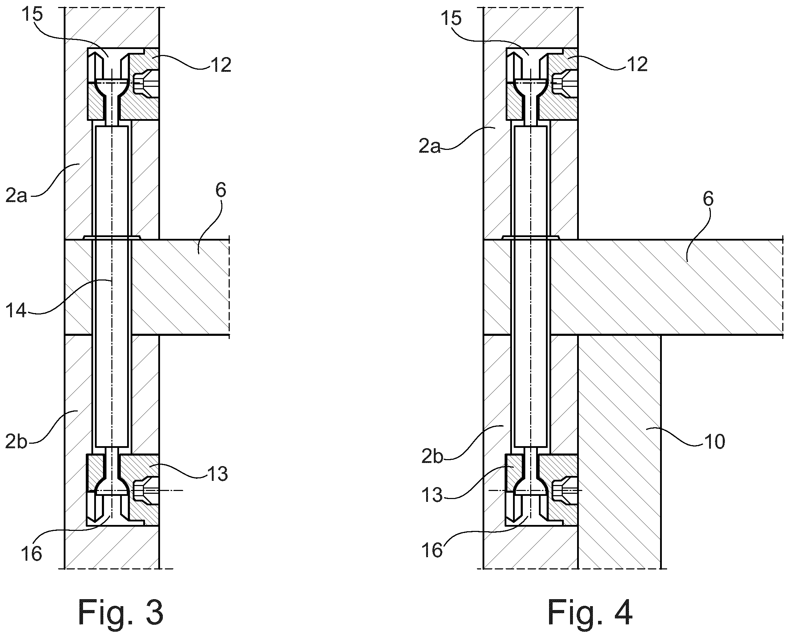

Figure 3 shows a cross-sectional view of a detail of another embodiment of the base cabinet, which is similar to the base cabinet 1 of figure 1, but is not provided with the support members 10, 11.

The side wall portion 2a and the side wall portion 2b are pulled together, clamping the carrier 6, by a an eccentric connector assembly, which has a first rotatable eccentric cam 12, a second rotatable eccentric cam 13 and a system bolt 14.

Both the first and second eccentric cams 12, 13 are arranged in a respective pocket 15, 16 in the side wall portions 2a and 2b respectively.

The system bolt 14 is provided on each end with a T-shaped cross-section which cooperates with a groove in the rotatable eccentric cam 12, 13. Each rotatable eccentric cam 12, 13 is rotatable within the respective pocket 15, 16 between a release position and a locking position. When a cam is rotated to the locking position, the T-shaped end of the system bolt 14 is pulled gradually to center of the cam, such that a pulling force is exerted between the cam and the system bolt. As either side is provided with a cam 12, 13 arranged in a pocket 15, 16 in the side wall portions 2a, 2b, turning the cams 12, 13 to the locking position ensures that the carrier 6 is firmly clamped between the side wall portions 2a, 2b. This will remove any play between the side wall portions 2a, 2b and the carrier 6.

It is furthermore clear from figure 3, that the carrier 6 rests on top of the side wall portion 2b. As a result the weight of a washing machine placed on top of the carrier 6 will be transferred in vertical direction straight into the side wall portion 2b (and side wall portion 3b).

Figure 4 shows a cross-sectional view of a detail of the base cabinet 1 as shown in figure 1 and 2. The configuration of side wall portions 2a, 2b and the carrier 6 is identical to the embodiment shown in figure 3. In addition a plate-like support member 10 is positioned on the inside against the side wall portion 2b and in contact with both the carrier 6 (as can be seen in figure 4) and the bottom wall 4 (as shown in figure 2). The plate-like support member 10 and the side wall portion 2b provide an increased vertical column, along which the weight carried by the carrier 6 can be transferred on to the bottom wall 4.

## Claims

1. Base cabinet in which a washing machine can be placed, the base cabinet comprising:
- two substantially vertical side walls,
- a substantially horizontal bottom wall,
- a substantially horizontal top wall, and
- a substantially horizontal carrier for carrying the washing machine, the carrier being placed between the bottom wall and the top wall,
wherein the side walls are placed on top of the bottom wall and wherein the carrier is fixed at a distance above the bottom wall, thus forming a first storage space between the bottom wall and the carrier and forming a second storage space between the carrier and the top wall for housing a washing machine,
**characterized in that**
both side walls are each composed out of two, separate side wall portions, wherein the carrier is positioned with a respective edge between the two side wall portions of each side wall; and
wherein the base cabinet further comprises pulling means for pulling the two, separate side wall portions of each side wall towards each other and clamping therewith the carrier between the separate side wall portions.

2. Base cabinet according to claim 1, further comprising two plate-like support members, each arranged parallel and against one of the side walls within the first storage space, and wherein the plate-like support members extend between and are in contact with the bottom wall and the carrier.

3. Base cabinet according to claim 1 or 2, further comprising a plate-like back support member arranged parallel to the back of the base cabinet, extending between and in contact with both the side walls and the bottom wall and the carrier.

4. Base cabinet according to any of the preceding claims, wherein the pulling means comprise an eccentric connector assembly having:
- a first rotatable eccentric cam arranged in a pocket provided in one of the side wall portions of a side wall;
- a system bolt having a first end mounted in the other of the side wall portions of the side wall and a second end shaped to engage with the first eccentric cam, wherein the system bolt extends parallel to the side wall through a hole arranged in the carrier;
wherein the first eccentric cam is rotatable within the pocket between a release position and a locking position, such that in the locking position, the cam applies a pulling force onto the system bolt, drawing the two side wall portions together and clamping the carrier in between.

5. Base cabinet according to claim 4, wherein the eccentric connector assembly further comprises a second rotatable eccentric cam arranged in a pocket provided in the other of the side wall portions of the side wall;
wherein the first end of the system bolt is shaped to engage with the second eccentric cam and
wherein the second eccentric cam is rotatable within the pocket to apply a pulling force onto the system bolt.

6. Combination of a base cabinet according to any of the preceding claims and a washing machine, wherein the washing machine is arranged on top of the carrier and into the second storage space.
